# EUROPÄISCHE PATENTSCHRIFT

(11) **EP 1 082 230 B1**
(45) Veröffentlichungstag und Bekanntmachung des Hinweises auf die Patenterteilung: **21.05.2003**
(21) Anmeldenummer: 99938148.6
(22) Anmeldetag: 28.05.1999
(51) Int. Cl.: B60K 35/00, B62D 1/18, B60R 11/02

(54) **KRAFTFAHRZEUG MIT EINEM BILDSCHIRM**
VEHICLE WITH A DISPLAY SCREEN
VEHICULE AUTOMOBILE AVEC UN ECRAN

(30) Priorität: 30.05.1998 DE 19824420
(43) Veröffentlichungstag der Anmeldung: 14.03.2001
(73) Patentinhaber: Ruetz Technologies, 80807 München (DE); Krause, Günter, 82194 Gröbenzell (DE)
(72) Erfinder: KRAUSE, Günter, D-82194 Gröbenzell (DE)
(74) Vertreter: Zipse + Habersack
(86) Internationale Anmeldenummer: DE9901686
(87) Internationale Veröffentlichungsnummer: WO99062733

(56) Entgegenhaltungen:
- DE-A- 19 744 382
- US-A- 5 564 668
- PATENT ABSTRACTS OF JAPAN vol. 1998, no. 03, 27. Februar 1998 (1998-02-27) & JP 09 297629 A (NEC CORP), 18. November 1997 (1997-11-18)

## Beschreibung

Die Erfindung bezieht sich auf ein Kraftfahrzeug mit einem Bildschirm als Anzeigeeinheit für einen Rechner. Als Rechner wird im Zusammenhang mit der vorliegenden Erfindung jede Einrichtung zur Verarbeitung von Daten verstanden, wie z. B. ein Bordcomputer, ein fahrzeuggebundener oder auch ein fahrzeugungebundener Personal Computer (PC).

Aus der FR 2 570 037 A1 ist ein Kraftfahrzeug mit einem Bildschirm im mittleren Bereich der Instrumententafel bekannt. Dieser Bildschirm wirkt mit einem fahrzeuggebundenen Rechner zusammen und zeigt unter anderem verschiedene Fahrzeugmeßgrößen wie Fahrzeuggeschwindigkeit, Motordrehzahl, Ölstand etc. an.

Nachteilig bei dem bekannten Kraftfahrzeug ist, daß der Bildschirm vom Fahrer nur durch Blickwendung weg von der Fahrbahn betrachtet werden kann. Außerdem ist der bekannte Bildschirm in einem Bereich der Instrumententafel angeordnet, der anderweitig für die Anordnung von Luftaustrittsöffnungen, Ablagen etc. benötigt wird. Darüber hinaus ist es an dieser Stelle des Kraftfahrzeuges nicht möglich, einen Bildschirm mit einer Größe anzuordnen, wie sie beispielsweise bei vollwertigen PC-Arbeitsplätzen gängig ist.

Die DE 197 44 382 A1 beschreibt ein Fahrzeng nach dem Oberbegriff des Anspruchs 1, mit einer Multifunktionsanzeige, verstellbarer Lenksäule und/oder verstellbarem Fahrersitz. Diese Multifunktionsanzeige ist hinter dem Lenkrad angeordnet. Damit der Fahrer unabhängig von der jeweiligen Stellung der Lenksäule und/oder des Fahrersitzes einen ungestörten Blick durch das Lenkrad auf die Anzeige hat, ist vorgesehen, dass auf jeweils durch das Lenkrad verdeckten Bereichen des Anzeigebildschirmes der Multifunktionsanzeige keine Informationen angezeigt werden, d.h. die darzustellende Information wird im Wesentlichen nur auf die vom Fahrer sichtbaren Bereiche des Anzeigebildschirmes verteilt.

Aufgabe der Erfindung ist es, eine Anordnung aufzuzeigen, um einen ausreichend großen Bildschirm im unmittelbaren Blickfeld des Fahrers plazieren zu können.

Diese Aufgabe wird durch die Merkmale des Anspruchs 1 oder 2 gelöst. Kerngedanke ist es dabei jeweils, den Bildschirm im Bereich des Lenkrades anzuordnen.

Gemäß Anspruch 1 ist das Lenkrad auf einem brückenförmigen Träger angeordnet, der den Bildschirm überspannt. Auf diese Weise wird in dem Bereich, in dem üblicherweise die mittige Lenksäule durch die Instrumententafel durchtritt, ein Freiraum für den Bildschirm geschaffen. Durch die Erfindung steht somit ein Bauraum zur Verfügung, der üblicherweise nicht zum Einbau eines Bildschirmes genutzt werden kann.

Zusätzlich ist gemäß Anspruch 2 die Anbindung des Lenkrades an das Kraftfahrzeug so gestaltet, daß das Lenkrad im Bedarfsfall zur Vergrößerung des Sichtfeldes auf den Bildschirm von diesem weg verlagert werden kann. Hierdurch wird eine Anordnung geschaffen, bei der der Bildschirm im direkten Blickfeld des Fahrers liegt und in einer Größe ausgebildet werden kann, die ein komfortables Arbeiten in gewohnter Weise ermöglicht.

Durch die Erfindung wird dem Bedürfnis Rechnung getragen, in einem Kraftfahrzeug, beispielsweise in einem gewerblich genutzten Kraftfahrzeug, jederzeit (z. B. nach Anfahren eines Parkplatzes) einen PC im Kraftfahrzeug nutzen zu können, beispielsweise um über Telekommunikationsmittel den Lagerbestand eines bestimmten Artikels abzufragen, um auf dem Weg zu einem Kunden eine Präsentation neuen Gegebenheiten anzupassen etc. Dies ist gemäß der Erfindung möglich, ohne den Fahrerplatz zu verlassen. Gegenüber sogenannten Notebooks ergibt sich der Vorteil, daß ein vollwertiger Bildschirm vorhanden ist und außerdem das Notebook nicht in ergonomisch ungünstiger und unkomfortabler Weise auf dem Beifahrersitz oder den Knien des Fahrers liegend bearbeitet werden muß. Somit muß auch in einer Limousine nicht auf einen entsprechend großen Bildschirm verzichtet werden, ohne den Fahrersitz verlassen zu müssen.

Es sind zwar frei programmierbare Bildschirme als Ersatz für ein Instrumentenkombi bekannt, die im Bereich hinter dem Lenkrad angeordnet sind und bestimmte Fahrzeugfunktionen wie Geschwindigkeit, Motordrehzahl, Ausgaben des Bordcomputers, Servicemeldungen etc. anzeigen. Für eine derartige Anzeigeeinheit steht jedoch nur ein begrenzter Bauraum zwischen der Oberkante der Lenksäule und der Unterkante der Abdeckung der Instrumententafel zur Verfügung. Außerdem ist die Sicht auf diese Anzeigeeinheit durch das Lenkrad begrenzt.

Daneben ist aus der WO 98/03366 A1 eine Anzeigeeinheit auf dem Lenkrad bekannt, die die Geschwindigkeit, Motordrehzahl, Kraftstoffmenge, Motortemperatur etc. anzeigt. Bei Rotation des Lenkrades wird der Bildschirm so angesteuert, daß die horizontale Ausrichtung der Anzeigen erhalten bleibt. Diese Anzeigeeinheit ist jedoch in ihrer Größe beschränkt, ebenso wie eine aus der FR 2 751 287 A1 bekannte Zusatzeinrichtung in Form eines kleinen Bildschirmes, der im Bereich hinter dem Lenkrad befestigt werden kann.

Die Verlagerung des Lenkrades erfolgt durch Verschieben (Anspruch 3) oder Verschwenken (Ansprüche 4 und 5), so daß die Sicht auf den Bildschirm in voller Größe frei wird.

Die Ansprüche 6 bis 8 beschreiben die Ausgestaltung sowie die Anbindung des Trägers für das Lenkrad näher. Gemäß Anspruch 9 ist das Lenkrad selbst gegenüber dem Träger verlagerbar, um einen möglichst großen Freiraum im Bereich des Bildschirmes zu schaffen. In Verbindung mit der Ausführung der Erfindung gemäß Anspruch 5 ist das Lenkrad dabei bevorzugt um eine etwa horizontal und quer zur Fahrtrichtung des Kraftfahrzeuges verlaufende Achse schwenkbar gelagert.

Trotz des Wegfalls einer konventionellen Lenksäule kann das Lenkrad gemäß Anspruch 10 über eine mechanische Übertragungseinrichtung mit dem Lenkgetriebe verbunden sein, beispielsweise über Bowdenzüge (Anspruch 11) oder Übertragungswellen (Anspruch 12). Diese Übertragungseinrichtungen verlaufen beispielsweise in Hohlräumen des brückenartigen Trägers.

Die mechanische Übertragungseinrichtung kann gemäß Anspruch 13 von der Verbindung zum Lenkgetriebe abkoppelbar sein, um eine Verlagerung des Lenkrades mit dem Träger zu ermöglichen. Alternativ kann durch mit entsprechender Überlänge ausgeführte Übertragungseinrichtungen auch eine permanent bestehende Verbindung zum Lenkgetriebe realisiert werden.

Durch eine elektrische Übertragung des Lenksignals (Anspruch 14) wird in an sich bekannter Weise die Übertragung der Lenkbewegung ohne direkte mechanische Verbindung erreicht ("steer by wire").

Gemäß den Ansprüchen 15 und 16 ist eine Tastatur so am Bildschirm angeordnet, daß sie einerseits den während der Fahrt des Kraftfahrzeuges nicht benötigten einen Teil des Bildschirms abdeckt und andererseits in eine ergonomisch günstige Bedienlage überführt werden kann.

Die obere Hälfte des Bildschirms wird gemäß Anspruch 17 während der Fahrt des Kraftfahrzeuges permanent zur Anzeige von Fahrzeugfunktionen verwendet, während der gesamte Bildschirm in der Nichtgebrauchslage des verlagerten Lenkrades als vollwertiger Bildschirm für einen PC dient (Anspruch 18).

Darüber hinaus können in vorteilhafter Weise Komfort- und Sicherheitsfunktionen (Ansprüche 19 bis 23) realisiert werden.

Mögliche Ausführungsbeispiele der Erfindung sind in der Zeichnung dargestellt und nachfolgend näher erläutert. Es zeigt:
- Figur 1: eine erfindungsgemäße Anordnung eines Bildschirmes hinter einem Lenkrad auf einem brückenartigen Träger, in der Gebrauchslage des Lenkrades, in der Ansicht in Fahrtrichtung sowie quer zur Fahrtrichtung,
- Figur 2: eine der Figur 1 entsprechende Darstellung ohne Träger und Lenkrad,
- Figur 3: eine der Figur 1 entsprechende Darstellung, wobei der Träger mit dem Lenkrad in Richtung auf die Windschutzscheibe verschwenkt ist,
- Figur 4: eine der Figur 1 entsprechende Darstellung, mit Bowdenzügen zur Übertragung von Lenkbewegungen, in der Gebrauchslage des Lenkrades (mit abgenommenem Lenkrad) dargestellt,
- Figur 5: eine der Figur 4 entsprechende Darstellung, in der verschwenkten Lage von Träger und Lenkrad,
- Figur 6: eine der Figur 4 entsprechende Darstellung, mit starren Wellen zur Übertragung von Lenkbewegungen,
- Figur 7: eine der Figur 6 entsprechende Darstellung, in der verschwenkten Lage von Träger und Lenkrad und
- Figur 8: eine der Figur 7 entsprechende Darstellung einer "steer by wire"-Lenkanlage.

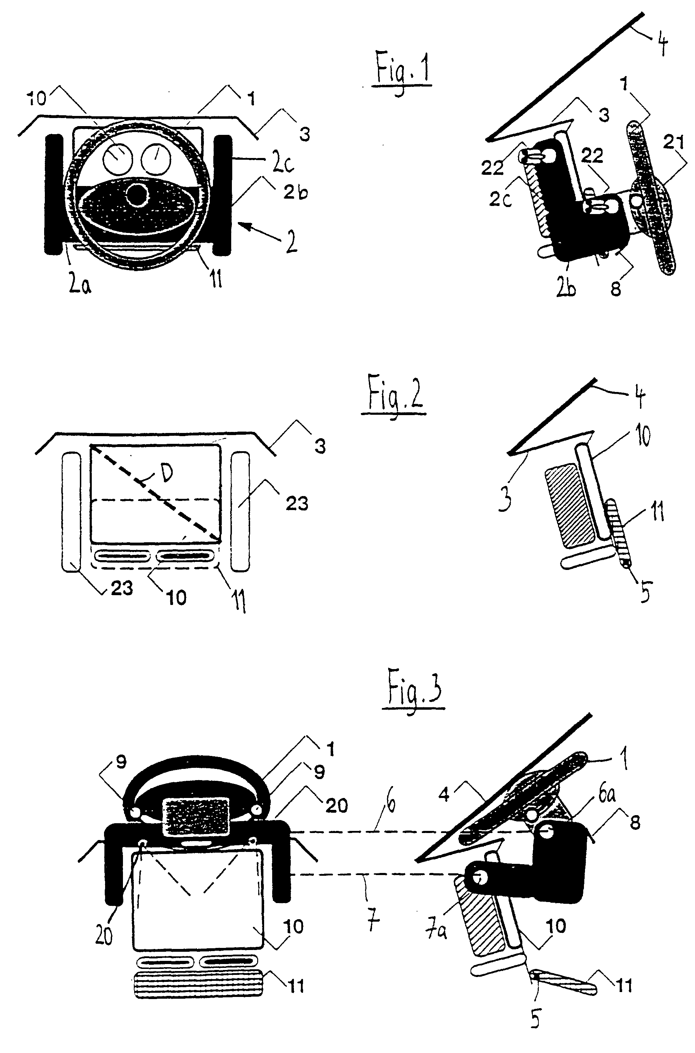

Die Figuren 1 bis 8 zeigen jeweils einen Ausschnitt aus einem Kraftfahrzeug im Bereich der Instrumententafel 3 vor dem Fahrer.

In den Figuren 1 bis 3 ist eine erfindungsgemäße Anordnung eines Lenkrades 1 dargestellt. Abweichend von bekannten Fahrzeugen werden die Lenkbewegungen des Lenkrades 1 nicht über eine zentrale Lenksäule übertragen. Vielmehr sitzt das Lenkrad 1 auf einem brückenartigen Träger 2, der einen hinter dem Lenkrad 1 befindlichen Bildschirm 10 überspannt. Der Träger 2 setzt sich aus einer in Fahrzeugquerrichtung verlaufenden Brücke 2a, zwei senkrecht davon abstehenden Armen 2b und sich an die Arme 2b anschließenden Verlängerungen 2c zusammen. Die Arme 2b sowie die Verlängerungen 2c sind seitlich des Bildschirmes 10 angeordnet, so daß der gesamte Raum hinter dem Lenkrad 1 für die Unterbringung eines vollwertigen Bildschirms 10 zur Verfügung steht, wie insbesondere aus der Darstellung der Figur 2 (ohne Träger 2 und Lenkrad 1) hervorgeht. Hierdurch wird beispielsweise eine Bildschirmdiagonale D von 17 Zoll ermöglicht. Die lenkradabgewandten Abschnitte der Arme 2b und der Verlängerung 2c tauchen in Schlitze 23 der Instrumententafel 3 ein. Unterhalb des Bildschirms 10 ist eine Tastatur 11 schwenkbar angeordnet (Drehachse 5).

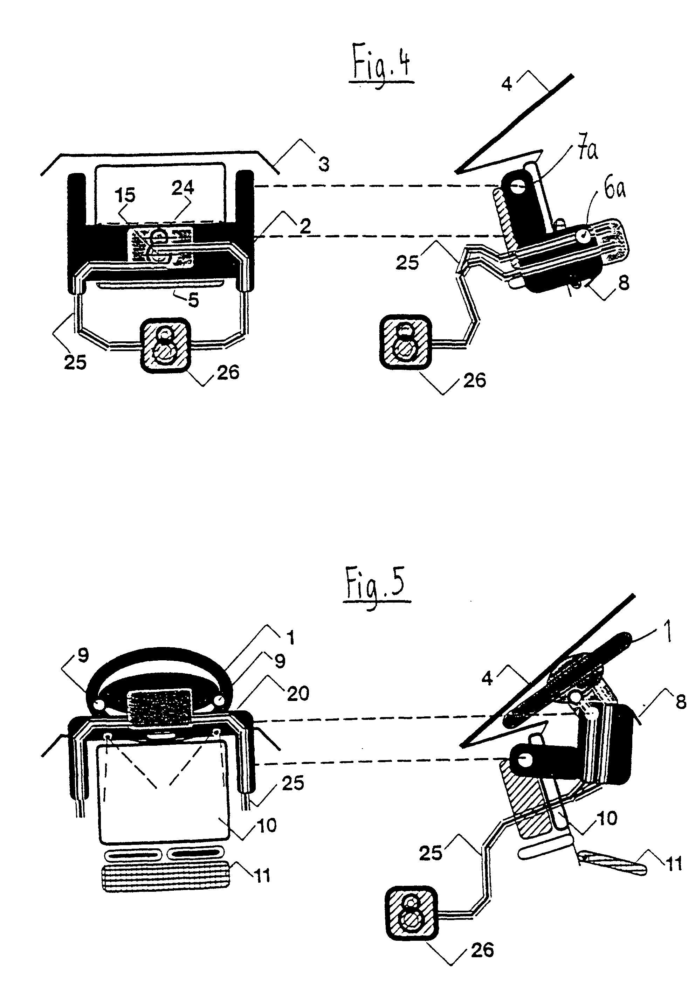

Wie aus Figur 3 näher hervorgeht, ist der Träger 2 über ein Schwenklager 7a mit einer Drehachse 7 gegenüber der Instrumententafel 3 schwenkbar gelagert. Die Drehachse 7 befindet sich oberhalb des Zentrums des Lenkrades 1. Hierdurch kann der Träger 2 samt Lenkrad 1 in Richtung auf die Windschutzscheibe 4 des Kraftfahrzeuges nach oben verschwenkt werden, so daß durch die U-förmige Brücke des Trägers 2 hindurch das Blickfeld auf die gesamte Fläche des Bildschirmes 10 frei wird. Zusätzlich kann das Lenkrad 1 um ein Schwenklager 6a mit einer Drehachse 6 weiter in Richtung auf die Windschutzscheibe 4 verschwenkt werden. Die Verschwenkung von Träger 2 und Lenkrad 1 erfolgt im Anschluß an die Betätigung eines Entriegelungsschalters 8, der elektromagnetische Verriegelungseinheiten 22 freigibt. Nach dem Verschwenken kann die Tastatur 11 aus ihrer in den Figuren 1 und 2 dargestellten Nichtgebrauchslage in ihre in Figur 3 dargestellte Gebrauchslage überführt werden, in der sie in ergonomisch günstiger Weise vom Fahrzeuginsassen bedient werden kann.

Die Entriegelung von Träger 2 und Lenkrad 1 ist ausschließlich bei stillstehendem Fahrzeug möglich, bevorzugt nur bei abgeschaltetem Antriebsmotor. Dies wird durch eine entsprechende Ansteuerung der Verriegelungseinheiten 22 erreicht. Gleichzeitig wird ein im Lenkrad 1 angeordneter Airbag 21 deaktiviert. Umgekehrt wird bei fehlender Verrastung in einer der beiden Verriegelungseinheiten 22 zuverlässig ein Starten des Fahrzeuges verhindert, wobei auch der Airbag 21 deaktiviert bleibt. Die Verschwenkung des Lenkrades 1 erfolgt komplett zusammen mit weiteren am Lenkrad angeordneten Bedienelementen, wie beispielsweise Lenkstockhebeln 9. An der Unterseite des Trägers 2 sind Beleuchtungseinrichtungen 20 vorgesehen, über die die Tastatur in der in Figur 3 dargestellten Lage des Trägers 2 beleuchtet wird.

Die Figuren 4 bis 8 zeigen verschiedene Möglichkeiten der Übertragung von Lenkradbewegungen auf ein Lenkgetriebe 26. Gleiche und gleichwirkende Elemente sind dabei mit denselben Bezugszahlen bezeichnet wie in den Figuren 1 bis 3 verwendet.

Im Ausführungsbeispiel der Figuren 4 und 5 ist eine mechanische Übertragungseinrichtung in Form von Bowdenzügen 25 dargestellt, die als Hochleistungs-Zug/Schub-Bowdenzüge ausgebildet sind. Die über das in Figur 4 nicht dargestellte Lenkrad erzeugten Drehbewegungen einer Lenkraddrehachse 24 werden über ein Getriebe 15 umgesetzt und an die aus Gründen der Redundanz paarweise ausgebildeten Bowdenzüge weitergeleitet. Die Bowdenzüge 25 führen zum Lenkgetriebe 26 und sind so verlegt, daß in der Normalgebrauchslage des Lenkrades 1 eine ausreichende Lose vorliegt, die genügend Freigang für eine Verlagerung des Trägers 2 zur Verfügung stellt. Die Bowdenzüge 25 sind in Hohlräumen des Trägers 2 verlegt. Gleichwirkend zu den dargestellten Bowdenzügen 25 können auch biegsame Übertragungswellen vorgesehen sein, die die Drehbewegungen des Lenkrades 1 nach der Umsetzung durch ein Getriebe 15 an das Lenkgetriebe weitergeben.

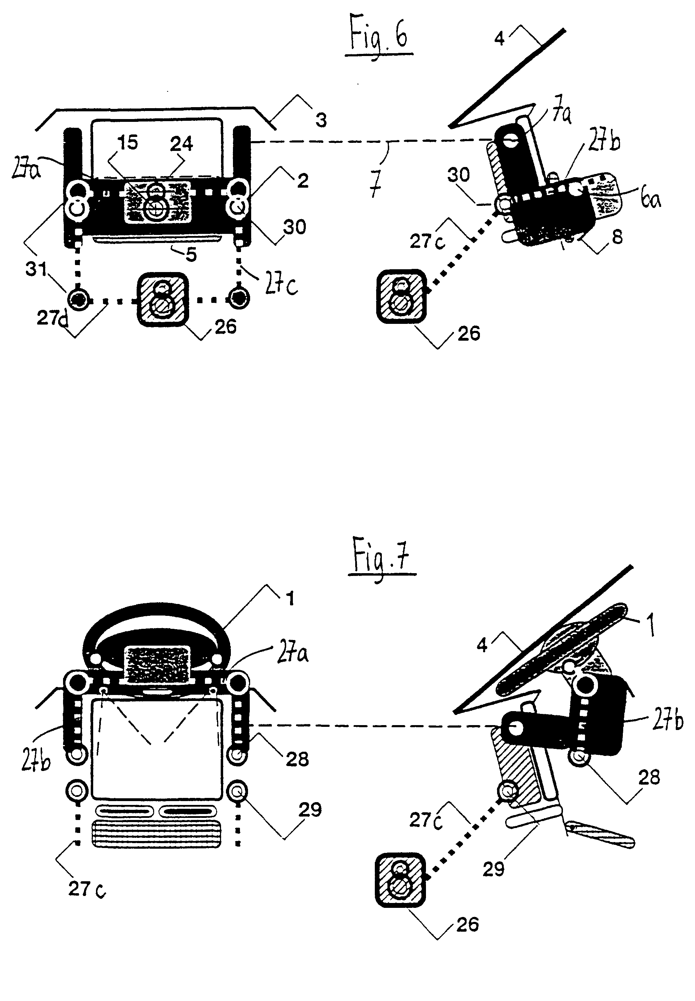

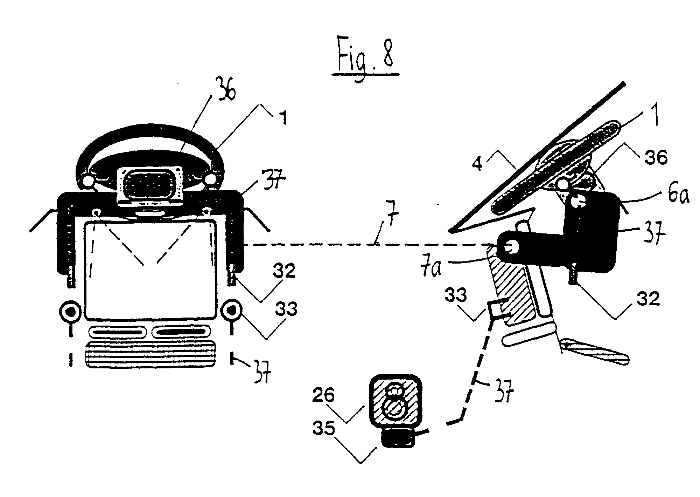

In den Figuren 6 und 7 ist eine weitere Ausführungsform der Erfindung dargestellt, bei der die Übertragung der Lenkbewegung durch starre Wellen 27a bis 27d erfolgt. Auch hier wird die Rotation der Lenkraddrehachse 24 durch ein Getriebe 15 umgesetzt und an ein erstes Paar starrer Wellen 27a im Inneren des Trägers 2 weitergeleitet. Über Winkeltriebe 31 wird die Drehbewegung um 90° umgelenkt und über starre Wellen 27b zu Kupplungen 30 an den unteren Abschnitten der Schenkel 2b weitergeführt. Von diesen Kupplungen 30 führen starre Wellen 27c zu zweiten Winkeltrieben 31 (oder kardanischen Verbindungen), über die mittels weiterer starrer Wellen 27d eine Einleitung der Drehbewegung in das Lenkgetriebe 26 erfolgt. Die Kupplung 30 mit ihren beiden Kupplungselementen 28 und 29 ermöglicht, wie insbesondere aus Figur 7 hervorgeht, eine temporäre mechanische Kopplung zwischen den trägerseitigen und den lenkgetriebeseitigen starren Wellen 27b bzw. 27c. Die Kupplung 30 kann beispielsweise in Form einer stimseitigen Verzahnung oder in Form eines Mitnehmerzapfens ausgeführt sein. Durch die redundante paarweise Ausführung der gesamten Übertragungseinrichtung wird eine hohe Funktionssicherheit erreicht.

Figur 8 zeigt eine weitere Ausführungsform der Erfindung ohne direkte mechanische Kopplung zwischen Lenkrad 1 und Lenkgetriebe 26. Vielmehr ist lenkradseitig ein Lenkwinkelgeber 36 vorgesehen, der ein elektrisches Signal erzeugt, das über elektrische Leitungen 37 an eine elektromotorische Stelleinheit 35 zur Ansteuerung des Lenkgetriebes 26 weitergeleitet wird. Mit dem Verschwenken des Trägers 2 wird die elektrische Leitung 37 über eine elektrische Verbindung aus Stecker 32 und Buchse 33 unterbrochen. Bei bestehender elektrischer Verbindung wird auf umgekehrten Weg über die Stelleinheit 35 auch eine Sensierung der Kraft- und Rückstellmomente der Lenkung vorgenommen, wobei ein entsprechender Antrieb am Lenkwinkelgeber 36 ein elektromotorisch erzeugtes Drehmoment als Rückmeldung für den Fahrer in das Lenkrad 1 einspeist. Auch die elektrische Übertragung gemäß Figur 8 ist redundant paarweise ausgeführt.

Neben der oben geschilderten grundsätzlichen Funktion einer erfindungsgemäßen Anordnung sind eine Reihe von Komfortfunktionen möglich. So kann beispielsweise mit dem Verschwenken des Trägers 2 und des Lenkrades 1 selbsttätig der Startvorgang des PCs des Kraftfahrzeuges in Gang gesetzt werden. Auch das selbsttätige Anschalten der Beleuchtungseinrichtung 20 entlastet den Fahrzeuginsassen, ebenso wie ein per Memory-Funktion abgespeichertes Verfahren des Fahrersitzes in die "PC-Arbeitsposition".

## Patentansprüche

1. Kraftfahrzeug mit einem Bildschirm als Anzeigeeinheit für einen Rechner, wobei der Bildschirm (10) - bezogen auf die Blickrichtung eines Fahrzeuginsassens - hinter dem Lenkrad (1) des Kraftfahrzeuges angeordnet ist **dadurch gekennzeichnet, daß**, das Lenkrad (1) auf einem brückenförmigen Träger (2) angeordnet ist, der den Bildschirm (10) überspannt.

2. Kraftfahrzeug nach Anspruch 1,
**dadurch gekennzeichnet, daß** das Lenkrad (1) mit dem brückenförmigen Träger vom Bildschirm (10) weg verlagerbar ist, um das Sichtfeld des Fahrzeuginsassens auf den Bildschirm (10) vergrößem zu können.

3. Kraftfahrzeug nach Anspruch 1 oder 2,
**dadurch gekennzeichnet, daß** der Träger in wenigstens einer Schiebeführung gelagert ist, die ein Verschieben des Trägers in Richtung seitlich oder oberhalb des Bildschirms ermöglicht.

4. Kraftfahrzeug nach Anspruch 1 oder 2,
**dadurch gekennzeichnet, daß** der Träger in wenigstens einem Schwenklager gelagert ist, das ein Verschwenken des Trägers neben den Bildschirm ermöglicht.

5. Kraftfahrzeug nach Anspruch 1 oder 2,
**dadurch gekennzeichnet, daß** der Träger (2) in wenigstens einem Schwenklager (7a) gelagert ist, das ein Verschwenken des Trägers (2) nach oben in Richtung der Windschutzscheibe (4) ermöglicht.

6. Kraftfahrzeug nach einem der vorgenannten Ansprüche,
**dadurch gekennzeichnet, daß** der Träger (2) eine in Querrichtung des Kraftfahrzeuges verlaufende Brücke (2a) zur Aufnahme des Lenkrades (1) aufweist, von deren Endabschnitten jeweils ein senkrecht zur Brücke (2a) verlaufender Arm (2b) absteht.

7. Kraftfahrzeug nach Anspruch 6,
**dadurch gekennzeichnet, daß** in Verlängerungen (2c) der beiden Endabschnitte der Arme (2b) jeweils ein Schwenklager (7a) mit einer im wesentlichen horizontal und quer zur Fahrtrichtung des Kraftfahrzeuges verlaufenden Schwenkachse (7) vorgesehen ist, wobei sich die Schwenklager in der zum Führen des Kraftfahrzeuges bestimmten Gebrauchslage des Lenkrades (1) oberhalb der Drehachse (24) des Lenkrades (1) befinden.

8. Kraftfahrzeug nach Anspruch 5,
**dadurch gekennzeichnet, daß** zu beiden Seiten des Bildschirmes (10) in der Instrumententafel (3) des Kraftfahrzeuges Aufnahmeschlitze (23) für die Schenkel (2b) und/oder Verlängerungen (2c) des Trägers (2) vorgesehen sind.

9. Kraftfahrzeug nach Anspruch 5,
**dadurch gekennzeichnet, daß** das Lenkrad (1) gegenüber dem Träger (2) verlagerbar ist.

10. Kraftfahrzeug nach einem der vorangegangenen Ansprüche,
**dadurch gekennzeichnet, daß** das Lenkrad (1) zur Übertragung von Lenkbewegungen auf das Lenkgetriebe (26) des Kraftfahrzeuges eine mechanische Übertragungseinrichtung (25, 27) aufweist.

11. Kraftfahrzeug nach Anspruch 10,
**dadurch gekennzeichnet, daß** die mechanische Übertragungseinrichtung von wenigstens einem Bowdenzug (25) gebildet wird.

12. Kraftfahrzeug nach Anspruch 10,
**dadurch gekennzeichnet, daß** die mechanische Übertragungseinrichtung von wenigstens einer starren Welle (27a bis 27d) und/oder einer biegsamen Welle gebildet wird.

13. Kraftfahrzeug nach einem der Ansprüche 10 bis 12,
**dadurch gekennzeichnet, daß** die mechanische Übertragungseinrichtung eine Kupplung (30) aufweist, die bei Verlagerung des Trägers (2) in die Nichtgebrauchslage des Lenkrades (1) die Verbindung zum Lenkgetriebe (26) löst.

14. Kraftfahrzeug nach einem der Ansprüche 1 bis 10,
**dadurch gekennzeichnet, daß** das Lenkrad (1) mit einem Geber (36) versehen ist, der ein elektrisches Ausgangssignal zur Ansteuerung des Lenkgetriebes (26) des Kraftfahrzeuges erzeugt.

15. Kraftfahrzeug nach einem vorangegangenen Ansprüche,
**dadurch gekennzeichnet, daß** am unteren Endbereich des Bildschirms (10) eine Tastatureinheit (11) vorgesehen ist.

16. Kraftfahrzeug nach Anspruch 15,
**dadurch gekennzeichnet, daß** die Tastatureinheit (11) mittels einer im wesentlichen horizontal und quer zur Fahrtrichtung des Kraftfahrzeuges verlaufenden Schwenkachse (5) von einer Nichtgebrauchslage in eine Gebrauchslage verschwenkbar ist und umgekehrt, wobei die Bedienelemente der Tastatureinheit (11) in der Nichtgebrauchslage der Tastatureinheit (11) dem Bildschirm (10) zugewandt sind.

17. Kraftfahrzeug nach einem vorangegangenen Ansprüche,
**dadurch gekennzeichnet, daß** der Bildschirm (10) in der zum Führen des Kraftfahrzeuges bestimmten Gebrauchslage des Lenkrades (1) zur Anzeige (34) von Daten aus dem Betrieb des Kraftfahrzeuges dient.

18. Kraftfahrzeug nach einem vorangegangenen Ansprüche,
**dadurch gekennzeichnet, daß** der Bildschirm (10) in der Nichtgebrauchslage des Lenkrades (1) als Anzeigeeinheit für einen PC im Kraftfahrzeug dient.

19. Kraftfahrzeug nach einem vorangegangenen Ansprüche,
**dadurch gekennzeichnet, daß** eine Sicherheitseinrichtung vorgesehen ist, die den Betrieb des Kraftfahrzeuges nur in der zum Führen des Kraftfahrzeuges bestimmten Gebrauchslage des Lenkrades (1) ermöglicht.

20. Kraftfahrzeug nach einem vorangegangenen Ansprüche,
**dadurch gekennzeichnet, daß** eine Sicherheitseinrichtung vorgesehen ist, die eine Verlagerung des Lenkrades (1) in seine Nichtgebrauchslage nur bei Stillstand des Kraftfahrzeuges und/oder abgeschalteter Antriebseinheit ermöglicht.

21. Kraftfahrzeug nach einem vorangegangenen Ansprüche,
**dadurch gekennzeichnet, daß** am Träger (2) eine Beleuchtungseinrichtung (20) vorgesehen ist, die in der Nichtgebrauchslage des Lenkrades (1) der Beleuchtung der Tastatureinheit (11) dient.

22. Kraftfahrzeug nach einem vorangegangenen Ansprüche,
**dadurch gekennzeichnet, daß** mit der Verlagerung des Lenkrades (1) in seine Nichtgebrauchslage der PC gestartet wird.

23. Kraftfahrzeug nach einem vorangegangenen Ansprüche,
**dadurch gekennzeichnet, daß** mit der Verlagerung des Lenkrades (1) in seine Nichtgebrauchslage der Fahrersitz in eine für die Bedienung der Tastatureinheit (11) und der Ablesung des Bildschirms (10) geeignete Position verfährt.

24. Träger (2) zur Aufnahme eines Lenkrades (1) für ein Kraftfahrzeug nach einem der vorgenanriten Ansprüche, **dadurch gekennzeichnet daß**, der Träger brückenförmig ausgeführt ist und mit einer Aufnahme für ein lenkrad versehen ist.

## Claims

1. A motor vehicle including a computer display, said display (10) - relative to the forwards viewing direction of the driver - being arranged behind the steering wheel (1) of said motor vehicle, **characterized in that** said steering wheel (1) is arranged on a bridging mount (2) incorporating said display (10).

2. The motor vehicle as set forth in claim 1, **characterized in that** said steering wheel (1) with said bridging mount can be displaced away from said display to make for added driver viewing space.

3. The motor vehicle as set forth in claim 1 or 2, **characterized in that** said mount is mounted in at least one slider guide permitting repositioning said mount to the side or above said display.

4. The motor vehicle as set forth in claim 1 or 2, **characterized in that** said mount is mounted in at least one pivot mount for pivoting said mount together with said display.

5. The motor vehicle as set forth in claim 1 or 2, **characterized in that** said mount (2) is mounted in at least one pivot bearing (7a) for pivoting said mount (2) upwards in the direction of the windscreen (4).

6. The motor vehicle as set forth in any of the preceding claims, **characterized in that** said mount (2) comprises a bridge (2a) oriented in the transverse direction of said motor vehicle for mounting said steering wheel (1), an arm (2b) protruding perpendicularly from each end section of said bridge (2a).

7. The motor vehicle as set forth in claim 6, **characterized in that** in the extensions (2c) of the two end sections of said arms (2b) a pivot bearing (7a) is provided having a pivoting axis (7) oriented substantially horizontal and transversely to the forwards direction of said motor vehicle, said pivot mounts being located above the spindle (24) of said steering wheel (1) in the normal position of said steering wheel (1) for steering said motor vehicle.

8. The motor vehicle as set forth in claim 5, **characterized in that** on both sides of said display (10) in the dashboard (3) of said motor vehicle, slots (23) are provided for receiving said arms (2b) and/or extensions (2c) of said mount (2).

9. The motor vehicle as set forth in claim 5, **characterized in that** said steering wheel (1) is repositionable relative to said mount (2).

10. The motor vehicle as set forth in any of the preceding claims, **characterized in that** for transmitting steering movements to the steering gear (26) of said motor vehicle said steering wheel (1) comprises mechanical transmission means ( 25, 27).

11. The motor vehicle as set forth in claim 10, **characterized in that** said mechanical transmission means is formed by at least one Bowden cable (25).

12. The motor vehicle as set forth in claim 10, **characterized in that** said mechanical transmission means is formed by at least one rigid shaft (27a to 27d) and/or a flexible shaft.

13. The motor vehicle as set forth in any of the claims 10 to 12, **characterized in that** said mechanical transmission means comprises a coupling (30) which releases the connection to said steering gear (26) when said mount (2) is repositioned into the non-operational position of said steering wheel (1).

14. The motor vehicle as set forth in any of the claims 1 to 10, **characterized in that** said steering wheel (1) is provided with an encoder (36) generating an electrical output signal for driving said steering gear (26) of said motor vehicle.

15. The motor vehicle as set forth in any of the preceding claims, **characterized in that** a keyboard (11) is provided at the lower end portion of said display (10).

16. The motor vehicle as set forth in claim 15, **characterized in that** said keyboard (11) can be pivoted by means of a pivoting axis (5) oriented substantially horizontal and transversely to the forwards direction of said motor vehicle from a non-operational position into an operational position and vice-versa, the controls of said keyboard (11) in the non-operational position of said keyboard (11) facing said display (10).

17. The motor vehicle as set forth in any of the preceding claims, **characterized in that** when said steering wheel (1) is positioned for steering said motor vehicle said display (10) serves as a data display (34) for operating said motor vehicle.

18. The motor vehicle as set forth in any of the preceding claims, **characterized in that** when said steering wheel (1) is in said non-operational position said display (10) serves as a PC display in said motor vehicle.

19. The motor vehicle as set forth in any of the preceding claims, **characterized in that** a safety means is provided which permits operation of said motor vehicle only when said steering wheel (1) is positioned for steering said motor vehicle.

20. The motor vehicle as set forth in any of the preceding claims, **characterized in that** a safety means is provided which permits repositioning said steering wheel (1) into its non-operational position only when said motor vehicle is stationary and/or its engine is OFF.

21. The motor vehicle as set forth in any of the preceding claims, **characterized in that** provided on said mount (2) is a lighting means (20) serving to illuminate said keyboard (11) in said non-operational position of said steering wheel (1).

22. The motor vehicle as set forth in any of the preceding claims, **characterized in that** repositioning said steering wheel (1) into its non-operational position starts said PC.

23. The motor vehicle as set forth in any of the preceding claims, **characterized in that** repositioning said steering wheel (1) into its non-operational position powers said driver's seat into a position suitable for striking said keyboard (11) and reading said display (10).

24. A mount (2) for mounting a steering wheel (1) for a motor vehicle as set forth in any of the preceding claims, **characterized in that** said mount is configured as a bridge and provided with a support for a steering wheel.

## Revendications

1. Véhicule automobile avec un écran en tant qu'unité d'affichage pour un calculateur ; l'écran (10) étant disposé derrière le volant (1) du véhicule automobile par rapport à la direction du regard d'un passager du véhicule automobile , **caractérisé en ce que** le volant (1) est disposé sur un support (2) en forme de pont qui traverse au dessus de l'écran (10).

2. Véhicule automobile selon la revendication 1, **caractérisé en ce que** le volant (1) avec le support en forme de pont, peut être éloigné de l'écran (10) pour agrandir le champs de vision du passager du véhicule automobile sur l'écran (10).

3. Véhicule automobile selon la revendication 1 ou 2, **caractérisé en ce que** le support est logé au moins dans un guidage à coulissement qui permet un coulissement du support vers le coté ou au-dessus de l'écran.

4. Véhicule automobile selon la revendication 1 ou 2, **caractérisé en ce que** le support est logé au moins dans un coussinet de pivotement permettant un pivotement du support vers le coté de l'écran .

5. Véhicule automobile selon la revendication 1 ou 2, **caractérisé en ce que** le support (2) est situé au moins dans un coussinet de pivotement (7a) permettant un pivotement du support (2) vers le haut en direction du pare-brise (4).

6. Véhicule automobile selon une des revendications précédentes, **caractérisé en ce que** le support (2) présente un pont (2a) s'étendant dans une direction transversale par rapport au véhicule automobile pour recevoir le volant (1) ; à partir des tronçon terminaux du pont s'étendant à chaque fois un bras (2b) de manière perpendiculaire audit pont (2a).

7. Véhicule automobile selon la revendication 6, **caractérisé en ce que** dans les prolongements (2c) des deux tronçons terminaux des bras (2b), il est prévu à chaque fois, un coussinet de pivotement (7a) avec un axe de pivotement (7) essentiellement horizontal et perpendiculaire par rapport à la direction de course du véhicule automobile ; les coussinets de pivotement se trouvant dans le position d'utilisation du volant (1), au-dessus de l'axe de rotation (24) du volant (1), nécessaire pour la conduite du véhicule automobile.

8. Véhicule automobile selon la revendication 5, **caractérisé en ce que** des deux cotés de l'écran (10) on a prévu des fentes de réception (23) dans le tableau de bord (3) du véhicule automobile pour les coussinets de pivotement (2b) et / ou les prolongements (2c) du support (2).

9. Véhicule automobile selon la revendication 5, **caractérisé en ce que** le volant (1) est déplaçable par rapport au support (2).

10. Véhicule automobile selon une des revendications précédentes, **caractérisé en ce que** le volant (1) présente un dispositif de transmission mécanique (25, 27) pour transmettre les mouvements du volant sur l'engrenage de direction (26)

11. Véhicule automobile selon la revendication 10, **caractérisé en ce que** le dispositif de transmission mécanique est formé d'au moins un train de « Bowden »(25).

12. Véhicule automobile selon la revendication 10, caractérisé en ce le dispositif de transmission mécanique est formé d'au moins un arbre rigide (27a à 27d) et / ou un arbre flexible.

13. Véhicule automobile selon la revendication 10, **caractérisé en ce que** le dispositif de transmission mécanique présente un embrayage (30) qui déconnecte la liaison avec l'engrenage de direction (26) lorsque le support (2) est déplacé vers la position de repos du volant (1).

14. Véhicule automobile selon une des revendications 1 à 10, **caractérisé en ce que** le volant (1) est pourvu d'un émetteur (36) qui produit un signal de sortie électrique pour commander l'engrenage de direction (26) du véhicule automatique.

15. Véhicule automobile selon une des revendications précédentes, **caractérisé en ce qu'**une unité de clavier (11) est prévue sur la zone terminale inférieure de l'écran (10).

16. Véhicule automobile selon la revendication 15, **caractérisé en ce que** l'unité de clavier (11) peut être pivoté au moyen d'un axe pivotable (5) s'étendant essentiellement de manière horizontale et perpendiculairement par rapport à la direction de circulation du véhicule automobile dans une position de repos à une position d'utilisation et vice-versa ; les éléments de commande de l'unité de clavier (11) étant orientés dans la position de repos de l'unité de clavier (11) vers l'écran (10).

17. Véhicule automobile selon une des revendications précédentes, **caractérisé en ce que** l'écran (10) sert à afficher (34) des données du moteur du véhicule automobile dans la position d'utilisation déterminée du volant (1) pour conduire le véhicule automobile.

18. Véhicule automobile selon une des revendications précédentes, **caractérisé en ce que** l'écran (10) sert en tant qu'unité d'affichage pour un ordinateur personnel (PC) installé dans le véhicule automobile en position de repos du volant (1).

19. Véhicule automobile selon une des revendications précédentes, **caractérisé en ce qu'**un dispositif de sécurité est prévu qui permet de faire fonctionner le véhicule automobile uniquement dans la position d'utilisation du volant (1) destinée à la conduite du véhicule automobile.

20. Véhicule automobile selon une des revendications précédentes, **caractérisé en ce qu'**une unité de sécurité est prévu permettant un déplacement du volant (1) vers sa position de repos uniquement lorsque le véhicule automobile est à l'arrêt et / ou lorsque l'unité d'entraînement est arrêté.

21. Véhicule automobile selon une des revendications précédentes, **caractérisé en ce qu'**un dispositif d'éclairage (20) est prévu sur le support (2) qui sert à éclairer l'unité de clavier (11) dans la position de repos du volant (1).

22. Véhicule automobile selon une des revendications précédentes, **caractérisé en ce que** l'ordinateur est démarré lorsque le volant (1) est mis dans sa position de repos .

23. Véhicule automobile selon une des revendications précédentes, **caractérisé en ce que** le siège du conducteur se déplace vers une position adaptée à la commande de l'unité de clavier (11) et à la lecture de l'écran (10) lors du déplacement du volant (1) vers sa position de repos.

24. Support (2) pour réceptionner un volant (1) pour un véhicule automobile selon une des revendications précédentes, **caractérisé en ce que** le support a la forme d'un pont et est pourvu d'un réceptacle pour un volant .
